# EUROPEAN PATENT APPLICATION

(11) **EP 0 720 130 A1**
(43) Date of publication of application: **03.07.1996**
(21) Application number: 95309410.9
(22) Date of filing: 22.12.1995
(51) Int. Cl.: G07F 19/00, G09B 21/00

(54) **An information presentation device**

(30) Priority: 29.12.1994 GB 9426340
(71) Applicant: NCR International, Inc., Dayton, Ohio 45479 (US)
(72) Inventor: Deans, Peter, Brackens, Dundee DD3 9RR (GB)
(74) Representative: Robinson, Robert George

(57) **Abstract**

An information presentation device (17) has an array of movable elements (20), a control means (4) for controlling the operation of the device (17) and actuation means (28) for selectively actuating said movable elements (20) to form a character, such as a Braille character, which can be read by a user by touching said movable elements (20). The control means (4) is arranged to cause the movable elements (20) to form a plurality of characters sequentially in order to present information to a user. An ATM (2) incorporating the information presentation device (17) can therefore be used by visually impaired or blind users.

## Description

The present invention relates to an information presentation device and in particular to such a device which can be used by visually impaired or blind users. The invention has application to an information presentation device used in a self-service transaction terminal such as an automated teller machine (ATM).

Known ATMs include an information presentation device in the form of a visual display screen for displaying information to, and requesting information from, a user. However, such visual display screens can not be used easily by visually impaired users and can not be used at all by blind users.

It is an object of the present invention to provide an information presentation device which can be used by visually impaired or blind users.

According to the present invention there is provided an information presentation device having a control means for controlling the operation of said device, characterized in that said device includes an array of movable elements, and actuation means for selectively moving said elements into actuated positions in which the actuated elements form a character which can be read by touching the actuated elements, said control means being arranged to control the operation of said actuation means so as to cause a plurality of said characters to be presented in sequence to the user.

An embodiment of the present invention will now be described, by way of example, with reference to the accompanying drawings, in which:
Fig. 1 is a perspective view of an ATM incorporating a user interface having an information presentation device in accordance with the present invention;
Fig.2 is an enlarged view of a portion of the user interface of Fig. 1, illustrating the information presentation device and a key pad;
Fig.3 is a perspective view of a block containing an array of movable elements and actuation means therefor, in accordance with the present invention;
Fig.4A is a sectional side elevational view of a portion of the block of Fig.3, illustrating a recess containing one of the movable elements in a de-actuated position;
Fig.4B is a view similar to Fig.4A but showing the movable element in an actuated position; and
Fig.5 is a block circuit diagram of the ATM of Fig. 1

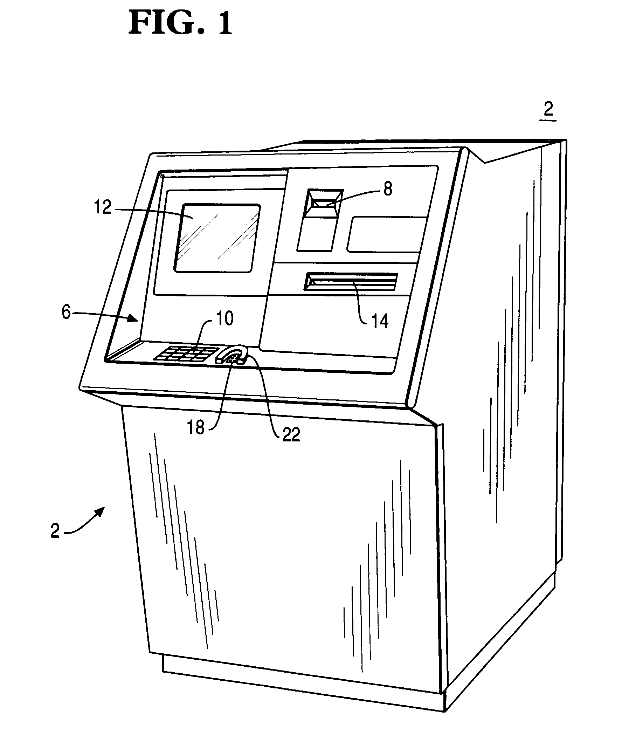

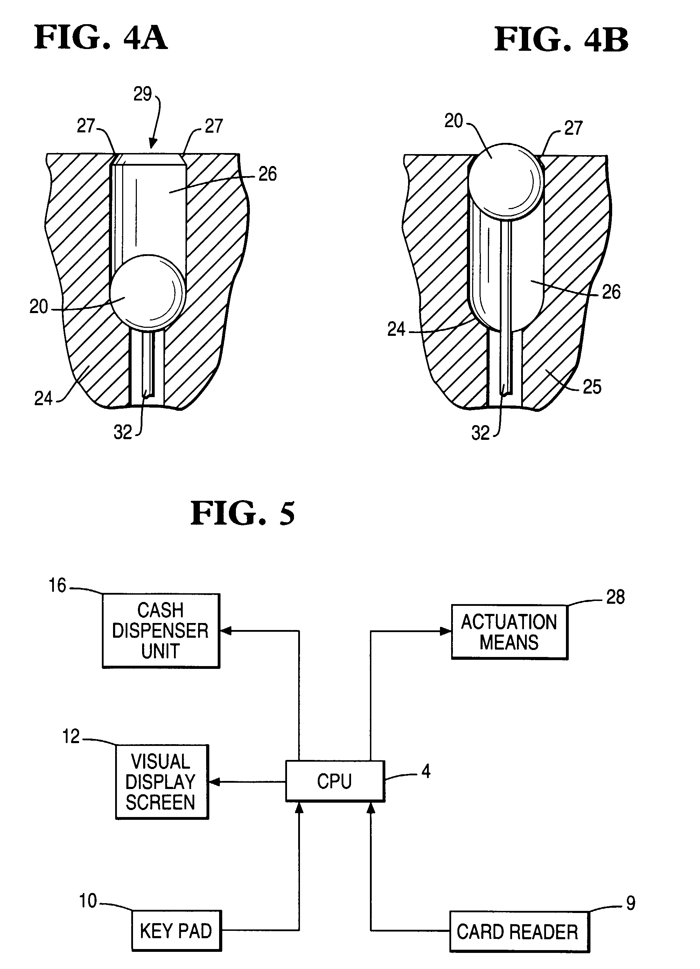

Figs. 1 and 5 illustrate an ATM 2 in accordance with the present invention which includes a control means in the form of a central processor unit (CPU) 4 which is connected to a user interface 6. The user interface 6 incorporates: a slot 8 connected to a conventional card reader 9 for reading a user identity card (not shown); a key pad 10 for inputting data; a conventional visual display screen 12 for displaying information to, and requesting information from, a user; and an output slot 14 for dispensing bank notes to a user. The key pad 10 consists of an array of keys 11 each of which is located in a respective individual recess 13. Thus visually impaired or blind users can differentiate between individual keys 11 and can therefore input information into the ATM 2 through the key pad 10.

The ATM 2 also incorporates a conventional cash dispenser unit 16 coupled to the output slot 14, and controlled by the CPU 4 to dispense cash to a user in the conventional manner.

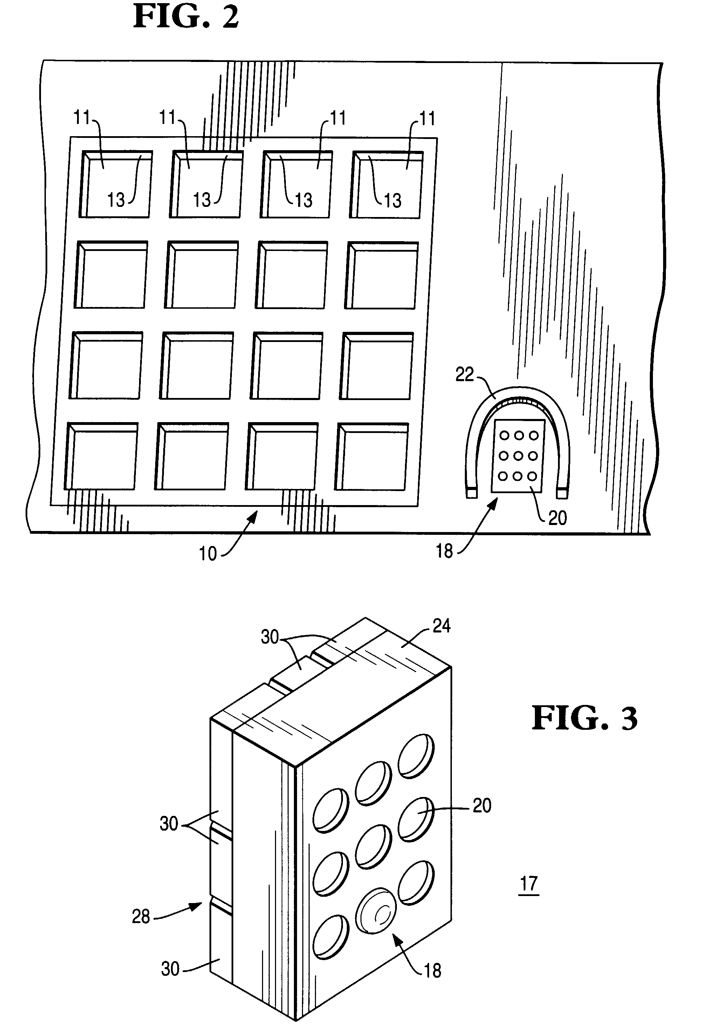

Referring now to Figs. 2 to 4, the interface 6 further incorporates an information presentation device 17 having an array 18 of movable elements 20 which are arranged so as to present information to a user in the form of a sequence of characters which can be read by touching the movable elements 20. The interface 6 also includes a substantially "U" shaped raised guide element 22 partially surrounding the information presentation device 17 so as to guide a user's hand to the array 18 of movable elements 20.

Referring particularly to Figs.3 and 4, there is illustrated a metal block 24 in which the array 18 of movable elements 20 is located. The movable elements 20 each comprise a nylon ball. Each ball is located and constrained within an individual recess 26 in the metal block 24. The balls are each about 1.5 to 2.0 millimetres in diameter, which is substantially the same diameter as the individual dots used in conventional Braille characters.

There are nine movable elements 20 formed in a three row by three column array 18, although only six elements are required to produce the complete alphabet of Braille characters. The additional elements enable the production of other symbols. For example, such other symbols could be used by the visually impaired and blind in countries where Braille characters are not utilized, such as Japan, China and some middle and far eastern countries.

Fig.4A illustrates a sectional side elevational view of a portion of the block 24 of Fig.3, illustrating one of the movable elements 20 in a de-actuated position in a recess 26. When the movable element 20 is in the de-actuated position it is urged into a correspondingly shaped portion 25 at the base of the substantially cylindrical recess 26 by spring means (not shown) via a rod 32 connected to the element 20. Fig.4B illustrates the movable elements 20 of Fig.4A in the actuated position, projecting partially out of the open end 29 of the recess 20. The movable element 20 is prevented from being extended further out of the recess 26 by a circumferential flange 27 at the open end 29 of the recess 26.

The elements 20 are selectively actuated by the CPU 4 through an actuation means 28, which consists of an array of solenoids 30 respectively associated with the elements 20. The armature (not shown) of each solenoid 30 is connected to the associated movable elements 20 via the respective rod 32, which urges the movable element 20 into the de-actuated position when the solenoid 30 is in a de-energized condition. Actuation of the solenoids 30 causes the associated rods 32 to move the movable elements 20 into the actuated position. The movable elements 20 move approximately 1 millimetres between the de-actuated and actuated positions.

The movable elements 20 extend only partially out of the recesses 26 when the solenoids 30 are actuated to prevent damage, such as bending of the rods 32 when in use.

In conventional Braille text the entire text is written in a series of sentences and paragraphs, as in conventional printed text, with the user reading the text by running a finger along each line of Braille text in turn. However, as the text in accordance with the present invention is presented sequentially one character after another by a single array 18 of movable elements 20, the user can read each Braille character as it is presented, without having to move his finger from the array 18. Thus the likelihood of the user missing any information presented by the information presentation device 17 is reduced. Each Braille character is presented to the user for less than one second, which is sufficient time for a proficient Braille reader to read each character.

When in use, the ATM 2 is accessed by the user inserting a user identification card into the card reader slot 8. The card reader 9 within the ATM 2 reads the card and transmits information read from the card to the CPU 4. The information will include an encrypted PIN number which must be entered by the user to enable access to the ATM 2. In normal operation, the CPU 4 then causes the visual display screen 12 to present a display requesting the input of the required PIN number by the user, in order to confirm that the user is authorised to use the card. If, as explained later, the ATM 2 is notified that the user is a blind or visually impaired person, then instead of, or in addition to, visually displaying a request for the user to enter his PIN number, the CPU 4 instructs the actuation means 28 to present this request to the user through the user interface device 17, in the form of a sequence of Braille characters which are read by the user by touching the array 18 of movable elements 20, as discussed above.

The PIN number is then input by the user via the key pad 10, as discussed above. Assuming the PIN number has been input correctly, the CPU 4 will then instruct the interface device 17 or both the interface 17 and the visual display screen 12 to provide the user with a menu of services provided by the ATM 2, such as withdrawal of cash, or the provision of a bank statement or the balance of an account. The ATM 2 then awaits the selection by the user of one or more of the available services. Once the user has selected the desired service or services, through the use of the key pad 10, the ATM 2 will process the request in the conventional manner, the user removing his user identification card prior to termination of the transaction.

As indicated above, information can be presented to a user both by means of the device 17 and through the visual display screen 12. Such dual presentation of information can be of benefit to visually impaired users who can read at least some of the information presented on the visual display screen 12.

The ATM 2 is notified that the user is a visually impaired or blind person by information encoded on the magnetic stripe on the user's user identification card. This encoded information also serves to notify the ATM 2 whether information is to be presented to the user by the device 17 alone or by both the device 17 and the visual display screen 12.

## Claims

1. An information presentation device (17) having a control means (4) for controlling the operation of said device (17), characterized in that said device (17) includes an array of movable elements (20), and actuation means (28) for selectively moving said elements (20) into actuated positions in which the actuated elements form a character which can be read by touching the actuated elements, said control means (4) being arranged to control the operation of said actuation means (28) so as to cause a plurality of said characters to be presented in sequence to the user.

2. A device according to claim 1, characterized in that said control means (4) is arranged to cause said movable elements (20) to form Braille characters.

3. A device according to claim 1 or claim 2, characterized in that said actuation means (28) incorporates an array of movable rods (32) each of which is connected to one of said movable elements (20) such that selective actuation of each rod (32) causes movement of the movable element (20) connected thereto into an actuated position.

4. A device according to claim 3, characterized in that said movable elements (20) are each mounted and constrained within a respective recess (26) in a block (24), and in that when moved into said actuated position each of said movable elements (20) extends partially out of the respective recess (26).

5. A device according to any one of the preceding claims, characterized in that each of said movable elements (20) comprises a ball.

6. A device as claimed in claim 5, characterized in that each ball is between 1.5 to 2.0 millimetres in diameter.

7. A self-service transaction terminal (2) incorporating an information presentation device (17) as claimed in any one of the preceding claims.
